# FASCICULE DE BREVET EUROPEEN

(11) **EP 0 893 680 B1**
(45) Date de publication et mention de la délivrance du brevet: **24.11.2004**
(21) Numéro de dépôt: 98113130.3
(22) Date de dépôt: 15.07.1998
(51) Int. Cl.: G01M 17/02

(54) **Dispositif de surveillance des sollicitations subies par un pneumatique**
Gerät zur Überwachung der Beanspruchungen eines Reifens
Apparatus for monitoring the load on a tyre

(30) Priorité: 23.07.1997 FR 9709453
(43) Date de publication de la demande: 27.01.1999
(73) Titulaire: Compagnie Générale des Etablissements MICHELIN-MICHELIN & CIE, 63040 Clermont-Ferrand Cedex 09 (FR)
(72) Inventeur: Billieres, Jean, 63100 Clermont-Ferrand (FR)
(74) Mandataire: Diernaz, Christian

(56) Documents cités:
- FR-A- 2 487 979
- US-A- 4 318 436
- US-A- 5 303 756

## Description

L'invention concerne un dispositif de surveillance du niveau de sollicitation supportée par un pneumatique pendant son utilisation sur un véhicule et plus particulièrement un dispositif permettant de s'assurer qu'un pneumatique a ou n'a pas roulé dans des conditions de sollicitation pénalisantes conduisant à une réduction sensible de sa durée de vie potentielle, comme par exemple un roulage à une pression très inférieure à la pression de gonflage recommandée voire même à une pression nulle. L'invention concerne également un pneumatique équipé d'au moins un tel dispositif pendant ou après sa fabrication.

Les pneumatiques subissent de fortes contraintes durant leur utilisation; par contraintes, on entend à la fois les contraintes résultant de la charge supportée et aussi les contraintes résultant des cycles de déformation qui sont définis par une amplitude et par un nombre total de cycles (chaque passage d'un secteur du pneumatique dans la zone de contact correspond à un cycle).

Un pneumatique usuel est formé de bourrelets destinés à être en contact avec les sièges d'une jante de montage, d'une armature de sommet surmontée d'une bande de roulement destinée à entrer en contact avec le sol pendant le roulage, et de flancs assurant la liaison entre lesdits bourrelets et ladite armature. A chaque passage dans la zone de contact avec le sol, la partie de la bande de roulement affectée par le contact avec le sol transmet la charge supportée par le pneumatique audit sol et les flancs assurent la transmission desdits efforts entre la jante et la bande de roulement. Sous l'action de ces efforts de contact, les flancs se déforment localement, c'est-à-dire que la partie des flancs attachée à la partie de la bande de roulement affectée par le contact subit une flexion plus ou moins prononcée selon la charge supportée.

Par flexion, on entend que les flancs adoptent des profils, vus en coupe méridienne (c'est-à-dire perpendiculaire au plan équatorial du pneumatique), dont les rayons de courbure les plus petits vont en diminuant de l'entrée de la région de contact vers la partie médiane de celle-ci.

En augmentant la pression de gonflage du pneumatique, on augmente la raideur des flancs et on réduit alors la déformation de flexion de ceux-ci pour une même charge supportée.

Pour équilibrer les efforts dus à la pression de gonflage et limiter la déformation qui en résulte, les flancs en matière élastomérique sont renforcés par une armature de carcasse comportant au moins une nappe composée d'une pluralité de renforts sous forme de fils ou câbles orientés suivant une direction faisant un angle au moins égal à 45 degrés avec la direction circonférentielle; ces renforts supportent une composante d'effort de traction qui résulte du gonflage du pneumatique. L'armature de carcasse supporte la même déformation que le flanc à chaque cycle : elle est donc soumise principalement aux mêmes cycles de flexion à chaque passage dans la zone de contact. En outre, et selon la position de ladite armature de carcasse dans l'épaisseur du flanc, cette armature est, dans cette sollicitation de flexion, soumise à des variations répétées d'efforts dont l'amplitude est directement liée à la flexion imposée à ladite armature.

En fin de roulage d'un pneumatique, c'est-à-dire, par exemple, quand la bande de roulement atteint une usure qui nécessite que ledit pneumatique soit rechapé/rénové avec une nouvelle bande de roulement, ou bien lorsqu'un pneumatique, dégonflé suite par exemple à un endommagement, doit être réparé, il est très important pour la sécurité de l'utilisateur ultérieur de vérifier l'état dans lequel se trouve le pneumatique et, entre autre, de l'état d'endommagement de l'armature de carcasse. Par état du pneumatique, on entend une évaluation quantitative de la diminution éventuelle de son potentiel d'endurance résultant des conditions de roulage, sachant qu'à l'état initial le potentiel du pneumatique neuf est maximal et qu'une limite est fixée au delà de laquelle le pneumatique n'est plus utilisable car il ne présente plus un potentiel d'endurance suffisant pour l'utilisateur.

Dans le cas de véhicules de tourisme, il est très fréquent d'observer des pneumatiques gonflés à une pression très inférieure à la pression de service (c'est-à-dire la pression préconisée pour laquelle le potentiel de performance d'endurance dudit pneumatique est optimal sous des conditions d'utilisation préconisées); dans une telle configuration, une utilisation relativement brève peut être sans conséquence tandis qu'une utilisation prolongée ou répétée peut se traduire par une diminution sensible de potentiel d'endurance et donc de durée de vie comparativement à ce qui peut être raisonnablement attendu dans les conditions nominales préconisées. Toutefois, cette situation n'empêche pas le conducteur du véhicule de rouler parfois pendant de nombreux kilomètres.

Malheureusement, très souvent l'endommagement du pneumatique résultant de cette utilisation anormale pendant un temps cumulé plus ou moins important n'est pas décelable visuellement ni même à l'aide d'un examen attentif de l'intérieur ou de l'extérieur du pneumatique.

Par ailleurs, dans un grand nombre d'utilisations sur des véhicules poids lourd par exemple, et dans le but de pouvoir supporter des charges très importantes, il est fréquent d'employer ce que l'on nomme une monte jumelée de pneumatiques. Une monte jumelée désigne le montage sur un même essieu de deux paires de pneumatiques identiques, lesdits pneumatiques étant gonflés à la même pression de service en utilisation normale.

Avec ce type de montage, il arrive assez fréquemment que l'un des deux pneumatiques soit partiellement voire totalement dégonflé tandis que l'autre pneumatique conserve toute sa pression de gonflage. Toutefois, cette situation n'empêche pas le conducteur du véhicule de rouler pendant de nombreux kilomètres sans s'en apercevoir, à moins d'être équipé d'un système avertisseur de dégonflement.

Dans une telle situation, le pneumatique partiellement ou totalement dégonflé présente une rigidité réduite comparativement à la rigidité de l'autre pneumatique gonflé formant la paire; en conséquence, le pneumatique gonflé supporte quasiment seul toute la charge habituellement portée par les deux pneumatiques formant la paire tandis que le pneumatique dégonflé ne porte qu'une partie de la charge d'autant plus faible que sa pression interne est faible devant celle de l'autre pneumatique.

En conséquence, les pneumatiques gonflé et non gonflé formant une même paire subissent un écrasement supplémentaire, c'est-à-dire que leurs flancs sont soumis à des cycles de flexion pénalisants et pouvant provoquer un endommagement de fatigue au niveau par exemple des armatures de renforcement desdits pneumatiques.

Par conséquent, et à la différence du pneumatique gonflé, dont l'armature de carcasse reste toujours soumise à une extension malgré la plus forte flexion, l'armature de carcasse du pneumatique dégonflé n'est pratiquement pas en extension et peut même passer localement en compression pour de très fortes flexions (correspondant à des rayons de courbure très petits relativement aux rayons de courbure pris par la même armature dans les conditions préconisées). Cette sollicitation alternée de faible extension suivie éventuellement de compression dans l'armature de carcasse peut se traduire, si le nombre de cycles est suffisant, par un endommagement progressif de ladite armature rendant inutilisable ledit pneumatique. On parle d'endommagement par fatigue de l'armature de carcasse par analogie avec ce que l'on obtient en pliant de façon répétée une tige métallique par exemple.

Le document US 4318436 décrit un dispositif subissant un changement d'aspect visible lorsqu'un pneumatique est soumis à un sous gonflage; ce dispositif sert d'avertisseur et ne mémorise pas les cycle de flexion subis par le pneumatique dans ces conditions de sous gonflage.

Dans le cas de certains roulages sous fortes charges et/ou faibles pressions, il peut arriver que les flancs des pneumatiques, constituant une paire dans un montage jumelé, se touchent au moins localement à chaque passage dans le contact, ce qui provoque également une diminution des caractéristiques de résistance et d'endurance des flancs en contact après un temps de roulage donné.

Pour détecter un pneumatique ayant subi un roulage dans de telles conditions, il est connu d'inspecter visuellement l'extérieur et l'intérieur du pneumatique afin d'y déceler d'éventuels indices. L'expérience a montré qu'il était très difficile d'obtenir des résultats fiables avec cette méthode, et cela même pour une personne spécialiste, pour un pneumatique utilisé sur un véhicule tourisme, poids lourd ou autre.

Pour parvenir à obtenir une information sur l'état d'endommagement d'un pneumatique, on a développé des dispositifs et appareillages complexes employant des moyens de radiographie ou de radioscopie ou un laser de façon à déceler directement dans la structure constituant ledit pneumatique d'éventuels indices traduisant un endommagement dudit pneumatique et résultant des conditions particulières de roulage. Cependant, ces moyens, outre le fait qu'ils ne sont pas toujours disponibles sur le lieu de la réparation du pneumatique, sont le plus souvent de mise en oeuvre délicate, par exemple dès lors que l'endommagement du pneumatique concerne son armature de carcasse et est interne à la structure de ladite armature. Un temps d'observation assez long est, en outre, nécessaire si l'on veut réaliser une très minutieuse et indispensable vérification.

De plus, une installation de ce type est relativement coûteuse et nécessite dans le cadre de son utilisation un savoir-faire important.

En règle générale, quand il y a doute, on gonfle, dans une cage de protection, le pneumatique objet de l'examen à une pression supérieure à la pression de service (au moins 1,25 fois) de manière à provoquer volontairement un éclatement dudit pneumatique dans le cas où ses armatures de renforcement ont subi un endommagement de fatigue important mais non apparent extérieurement. Cependant, il peut se trouver le cas d'un pneumatique qui n'éclate pas dans ce test de gonflage bien que son armature de renforcement soit endommagée et rende ledit pneumatique inutilisable sur un véhicule.

L'objectif de l'invention est de proposer un dispositif simple, peu coûteux, mémorisant et visualisant de manière permanente après roulage d'un pneumatique, le fait qu'au moins un composant dudit pneumatique a été sollicité de manière excessive, comparativement aux sollicitations habituelles dudit composant quand ledit pneumatique est employé aux conditions préconisées, et pour lesquelles il a été dimensionné, à la fois en terme d'amplitude de sollicitations et en terme de nombre de cycles de sollicitations. Par sollicitation, on entend une sollicitation mécanique, une sollicitation chimique, une sollicitation thermique voire une combinaison d'au moins deux de ces sollicitations.

Selon l'invention, il est proposé un dispositif de surveillance de l'état d'endommagement d'au moins un composant d'un pneumatique, ledit pneumatique pouvant avoir subi au moins une sollicitation prédéterminée pendant au moins une partie du temps d'utilisation dudit pneumatique sur un véhicule. Ledit dispositif est caractérisé en ce qu'il est prévu pour être disposé sur ou dans un pneumatique à proximité dudit composant avant roulage, et en ce qu'il comporte au moins un moyen sensible à la sollicitation prédéterminée de façon à pouvoir mémoriser au moins une information permanente selon laquelle ladite partie a subi ladite sollicitation pendant au moins un nombre de cycles donnés ou bien pendant un temps donné.

Par composant on entend soit une armature de renforcement soit une partie du pneumatique en mélange de caoutchouc par exemple.

Un dispositif selon l'invention offre l'avantage de fournir pendant et après roulage une information fiable selon laquelle un pneumatique équipé d'un tel dispositif, a ou n'a pas subi des conditions de roulage très pénalisantes sur le plan du potentiel d'endurance du pneumatique.

Plus spécifiquement, on emploie un dispositif de surveillance en combinaison avec un pneumatique pour surveiller l'état d'endommagement d'une armature de renforcement d'un pneumatique en roulage sur un véhicule et pour mémoriser des conditions de roulage sous gonflé d'un pneumatique présentant une paroi interne et une paroi externe, la pression de gonflage du pneumatique s'exerçant sur la paroi interne, ladite armature surveillée étant au moins localement soumise à au moins une sollicitation mécanique variable de façon cyclique.

Le dispositif de surveillance de l'endommagement de ladite armature sous forte flexion est caractérisé en ce qu'il comprend un support mince très flexible dont une face est prévue pour pouvoir être fixée sur l'une des parois du pneumatique et à proximité de l'armature objet de la surveillance et en ce que ledit support comporte des moyens sensibles à une forte flexion et mémorisant de manière permanente au moins une information selon laquelle l'armature surveillée a subi une forte flexion pendant au moins un nombre de cycles donné, ladite information mémorisée de manière permanente pouvant être contrôlée visuellement par un opérateur ou bien d'une façon automatique, avec ou sans démontage du pneumatique.

Un avantage du dispositif selon l'invention est de fournir une information sur une éventuelle dégradation excessive des caractéristiques mécaniques et chimiques initiales des mélanges de caoutchouc constituant l'une des parois du pneumatique; ladite dégradation pouvant être un vieillissement accéléré des mélanges résultant, par exemple, d'une combinaison des effets dus à la température, à la présence d'oxygène au voisinage de ladite paroi, et aux sollicitations mécaniques.

Un autre avantage d'un dispositif conforme à l'invention est de pouvoir être mis en place sur un pneumatique neuf pendant ou après fabrication dudit pneumatique ou bien encore après une réparation, un rechapage (rénovation de la bande de roulement après usure de celle-ci) ou toute autre intervention sur ledit pneumatique.

L'invention qui vient d'être exposée sera mieux comprise à l'aide des figures suivantes ayant trait à des variantes de réalisation présentées uniquement à titre d'exemples :
- la figure **1** montre un dispositif selon l'invention comportant trois fils sensibles à des sollicitations de fortes flexions répétées;
- la figure **2** montre une coupe selon **A-A** réalisée sur la figure **1** transversalement aux fils;
- la figure **3** montre une coupe selon **B-B** réalisée sur la figure **1** le long d'un fil;
- la figure **4** montre le dispositif de la figure **1** après utilisation sur un pneumatique ayant subi des conditions de roulage sous faible pression pendant un temps relativement important;
- la figure **5** montre une coupe d'un pneumatique pourvu sur sa surface interne et dans la région du flanc d'un dispositif selon l'invention formé d'une faible épaisseur d'un mélange de caoutchouc sensible à de fortes flexions répétées;
- la figure **6** montre une coupe du pneumatique de la figure **5** dans des conditions de roulage imposant aux flancs du pneumatique une très forte flexion à chaque passage dans le contact.

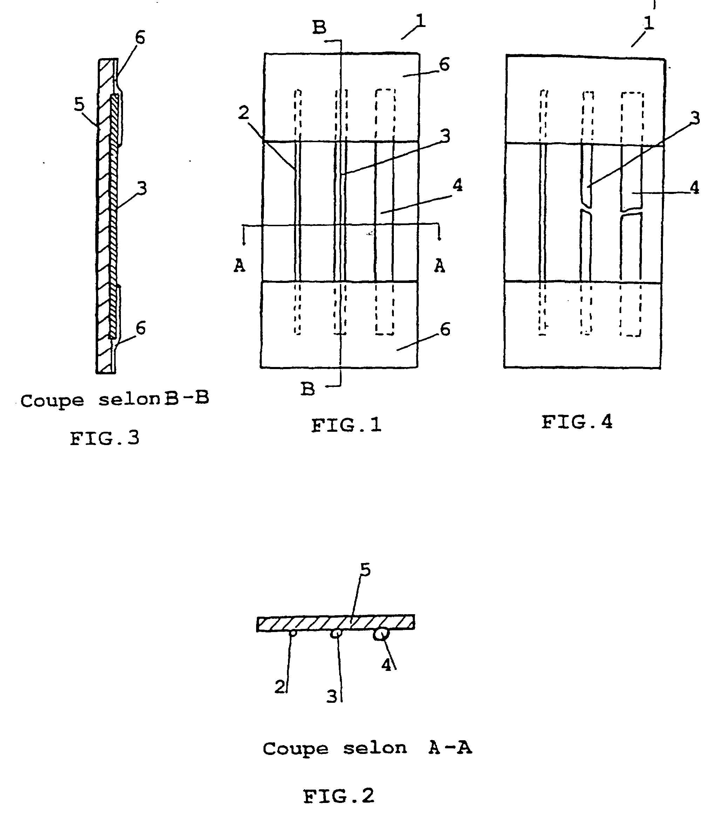

Une variante de dispositif **1** selon l'invention est représentée à la figure **1**, selon laquelle ledit dispositif comporte des moyens **2, 3, 4** sensibles à une forte flexion et pouvant mémoriser le fait que ledit dispositif a été soumis à des cycles répétés de flexion entre un premier rayon de courbure **Rmax** et un deuxième rayon de courbure **Rmin**, l'un au moins desdits deux rayons de courbure étant inférieur ou égal au rayon limite de fatigue de l'un des moyens sensibles.

Par rayon limite de fatigue d'un moyen sensible, on entend que si ce même moyen est soumis à des cycles de flexion entre deux rayons de courbure, tous les deux étant supérieurs à ce rayon limite de fatigue, alors ledit moyen n'est pas sujet à un endommagement irréversible et visible. Selon la valeur des deux rayons de courbure extrêmes, on obtient une limite de fatigue du moyen sensible qui est une fonction à la fois de la valeur desdits rayons de courbure minimal et maximal et du nombre de cycles auxquels est soumis ledit moyen.

Le dispositif **1** représenté sur la figure **1** de forme sensiblement rectangulaire est formé d'une couche mince (épaisseur : **0.6** mm) de caoutchouc formant le support **5** du dispositif; sur ce support **5** sont placés trois fils **2, 3, 4** de manière à ce qu'ils soient orientés dans une même direction parallèle au grand côté du rectangle formé par le support. Les fils sont choisis parmi des fils (pouvant être formés d'un ou plusieurs fils eux-mêmes assemblés entre eux) présentant la particularité d'être sensibles à une sollicitation de flexion cyclique; on peut citer par exemple des fils en verre formés d'un ou plusieurs brins.

Les fils **2, 3, 4** de section transversale de forme circulaire ayant des diamètres différents présentent des caractéristiques de fatigue différentes, ce qui permet d'obtenir une information précise sur les conditions de roulage du pneumatique pourvu dudit dispositif. En effet, le fil de diamètre le plus grand a une limite en fatigue qui est atteinte avant que les autres fils de diamètres inférieurs n'atteignent leurs propres limites.

Les extrémités des fils **2, 3, 4** sont recouvertes par une fine couche de gomme **6** pour assurer la fixation desdits fils sur le support (comme cela est visible sur la coupe **B-B** représentée à la figure **3**) et pour permettre une lecture directe de l'information mémorisée comme cela peut être aisément constaté sur la figure **4** qui représente le même dispositif **1** ayant subi un nombre de cycles de flexion suffisant pour rompre les deux fils de diamètre les plus grands mais insuffisant pour rompre le troisième.

Une variante de réalisation consiste à employer au moins un fil sur un support, sans employer de couche de recouvrement des extrémités dudit ou desdits éléments, par exemple en prévoyant de revêtir chaque fil avec un agent de liaison assurant le collage avec le support. De façon préférentielle, le dispositif de surveillance est placé sur la paroi interne du pneumatique, pour ne pas risquer d'être enlevé en cours de roulage.

La couche servant de support aux fils est dans le cas présent réalisée en mélange de caoutchouc d'une épaisseur de 0.6 mm; cette couche pourrait bien entendu être réalisée dans tout autre matériau et d'épaisseur présentant des qualités satisfaisantes de résistance à des flexions répétées.

Après mise en place des fils sur l'une des surfaces dudit support, les extrémités des fils sont recouvertes d'une autre couche de mélange de caoutchouc de même nature que le support et l'ensemble est alors soumis à vulcanisation sous pression.

En outre, il peut être prévu d'indiquer, au moyen d'une marque visible sur la surface du dispositif portant le ou les fils, une direction parallèle à la direction du ou des fils, ladite direction étant perpendiculaire à la direction autour de laquelle doit se faire la flexion pour que celle-ci puisse éventuellement être décelée par au moins un fil (dans le cas présent, la direction repérée au moyen des deux flèches est perpendiculaire aux fils **2, 3, 4)**.

La figure **2** montre une coupe **A-A** du dispositif **1** de la figure **1**, ladite coupe étant réalisée suivant un plan transversal perpendiculaire aux trois fils **2, 3, 4** disposés parallèlement entre eux. Ces trois fils **2, 3, 4,** faisant légèrement saillie sur une des surfaces du support **5**, sont de même nature mais ont des sections transversales de forme circulaire de diamètres différents; la fragilité de chaque fil étant proportionnelle à son diamètre.

Le dispositif de la figure **4** correspond au dispositif montré à la figure **1** après utilisation sur un pneumatique ayant roulé pendant au moins un certain nombre de kilomètres sur un véhicule. Ce dispositif est le témoin d'un travail de flexion suffisant pour avoir créé un endommagement de rupture par fatigue compression sur deux des trois fils.

La présence de ces ruptures est un indice révélateur d'un roulage probable dans des conditions différentes des conditions préconisées; ce constat implique la mise hors service du pneumatique pour une utilisation normale similaire ou à tout le moins la nécessité d'un examen complémentaire des armatures de renforcement par d'autres moyens.

En utilisation sur un pneumatique, une rupture des trois fils auraient indiqué que le pneumatique avait probablement subi des conditions de roulage encore plus sévères ayant entraîné une dégradation très importante de l'armature de carcasse.

Dans le cas d'espèce la lecture de l'information mémorisée par le dispositif est faite directement, mais il est possible d'avoir recours à des moyen de radioscopie ou de radiographie permettant d'obtenir ladite information sans avoir à démonter le pneumatique.

Outre le dispositif qui vient d'être décrit, on peut aussi réaliser un autre dispositif pourvu d'un seul fil voire d'aucun.

Dans ce dernier cas, c'est-à-dire sans aucun fil, on choisit un support dont le matériau constitutif est sensible à une sollicitation donnée, par exemple une sollicitation de flexion cyclique, pendant un temps minimal donné et/ou un nombre de cycles donné. Par matériau sensible, on entend que ledit matériau présente des changements apparents d'au moins une de ses caractéristiques (par exemple, apparition de marques, de fissures, changement de couleur,...).

Cette sensibilité à une sollicitation de fatigue en flexion peut être apportée et réglée de manière appropriée en employant des mélanges à base de caoutchoucs diéniques tels que le caoutchouc naturel, les caoutchoucs synthétique de la famille des polybutadiènes ou des copolymères styrène-butadiène, ou encore des coupages de ces différents caoutchoucs entre eux. Cette sensibilité peut également être assurée par des formulations à base de butyls choisis pour leur faible résistance en fatigue dans le cas d'une sollicitation en compression élevée résultant d'une utilisation anormale du pneumatique.

Pour obtenir une meilleure tenue du dispositif sur un pneumatique, il est préférable d'incorporer ledit dispositif formé d'au moins un matériau sensible pendant la fabrication dudit pneumatique et de vulcaniser ensemble le pneumatique et le dispositif Cette disposition présente en outre l'intérêt d'éviter toute possibilité de falsification et par conséquent d'atteindre une plus grande fiabilité.

Une autre variante consiste à former un dispositif constitué de plusieurs mélanges, chacun des mélanges étant sensible à une sollicitation donnée pendant un temps ou un nombre de cycles donné; ainsi, il est possible d'obtenir une information précise des sollicitations subies par le pneumatique pendant son utilisation.

Un autre mode de réalisation d'un dispositif selon l'invention consiste à incorporer au moins un fil dans le pneumatique pendant la fabrication dudit pneumatique, chaque fil étant disposé sensiblement dans la direction d'une armature objet de la surveillance et de façon soit à être visible à l'oeil nu soit à l'aide d'un moyen complémentaire, par exemple en radioscopie.

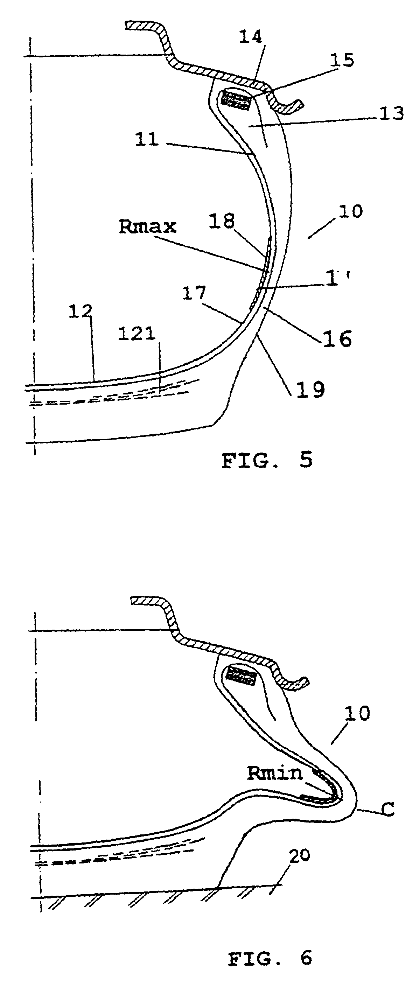

Les figures **5** et **6** ont trait à un exemple d'utilisation particulière d'un dispositif selon l'invention et permettant de déceler une sollicitation de flexion excessive de la région des flancs d'un pneumatique de véhicule poids-lourd, pouvant, si cette sollicitation se poursuit pendant un temps suffisamment long, conduire à un endommagement de fatigue de l'armature de carcasse.

Le pneumatique **10** dont une demi coupe méridienne est montrée à la figure **5** comporte une armature de carcasse **11** s'étendant entre le sommet **12** dudit pneumatique et des bourrelets **13** en contact avec une jante de montage **14**, l'armature de carcasse **11** étant retournée autour d'un noyau formant une tringle d'ancrage **15** de ladite armature. La région située entre un bourrelet **13** et le sommet **12** renforcé par une structure de renforcement **121** composée d'une pluralité de nappes correspond à la région d'un flanc **16** du pneumatique. Dans la partie dudit flanc **16** proche de la région du sommet et sur sa paroi interne (c'est-à-dire sur la paroi sur laquelle s'exerce la pression de gonflage du pneumatique), il est fixé, après vulcanisation du pneumatique (mais il aurait pu l'être pendant la confection du pneumatique avant vulcanisation) et de manière permanente, un dispositif **18** destiné à indiquer le fait que ledit pneumatique a roulé au moins pendant un temps fixé à priori et sous des conditions de flexion excessive. Ledit moyen est ici confondu avec le support même du dispositif **18** et consiste en un mélange de caoutchouc employé habituellement pour être en contact avec les renforts de l'armature de carcasse.

Sur la figure **6**, la demi coupe méridienne montre partiellement le pneumatique de la figure **5** dans la géométrie prise par celui-ci dans le passage du contact avec le sol **20** lorsque ledit pneumatique formant une paire d'une monte jumelée est gonflé à une pression très inférieure à sa pression d'utilisation. On constate qu'il existe une région du pneumatique, repérée par **C**, fortement fléchie dans laquelle l'armature de carcasse passe par un rayon minimal de flexion, **Rmin**, pouvant pénaliser de façon significative l'endurance de l'armature de carcasse après un nombre de cycles relativement faible.

Tout se passe comme si chaque renfort de l'armature de carcasse subissait une sollicitation de flexion à chaque tour de roue entre un premier rayon **Rmax** et un second rayon **Rmin**, le rayon **Rmax** étant quasiment égal au rayon mesuré sur la coupe méridienne du pneumatique gonflé et représentée à la figure **5**. Cette sollicitation de flexion peut, dans certaines conditions de roulage, encore être accentuée par le fait que les pneumatiques montés en jumelé viennent localement en contact

Le demandeur a procédé à des essais avec des dispositifs ayant des supports de dimensions **120** mm par **40** mm ou **80** mm par **10** mm et d'épaisseur **0.6** mm ou **0.3** mm réalisés dans un matériau à base de mélange de caoutchouc naturel dont la caractéristique essentielle est d'avoir une limite de fatigue quantifiable pour un cycle de flexion entre un rayon maximal et un rayon minimal de courbure (c'est précisément le dispositif utilisé dans des essais et correspondant aux figures **5** et **6**).

Après roulage sous des conditions de flexion excessive représentée sur la figure **6**, il a été observé que le matériau constituant le support **5** présentait localement et de manière visible des fissures sensiblement alignées avec la direction circonférentielle du pneumatique. En poursuivant le test, il a été constaté que ces fissures avaient tendance à s'étendre sur toute la largeur du support **5**. Parallèlement, des tests de roulage aux conditions préconisées ont été conduits sur des pneumatiques identiques équipés dans les mêmes conditions de dispositif de surveillance similaires : ces tests ont montré la bonne tenue desdits dispositifs et l'absence de fissures aux bords desdits dispositifs.

Le dispositif selon l'invention peut être de forme rectangulaire, ronde ou toute autre selon le besoin; en outre, lorsqu'il est de forme allongée (par exemple rectangulaire) il peut être judicieux de le placer sur une paroi d'un pneumatique de manière à ce que ces bords ne soient pas parallèles, par exemple, aux renforts de l'armature de carcasse pour éviter une concentration de contraintes au niveau desdits bords . Pour éviter tout risque de décollement du dispositif, il peut être judicieux de prévoir que ses bords ne soient pas rectilignes mais, par exemple, dentelés.

Avantageusement, le dispositif selon l'invention peut comporter un revêtement qui s'efface progressivement sous l'action d'un frottement résultant du contact de deux parties du pneumatique sous des conditions de flexion excessives; il est judicieux de choisir un revêtement qui présente entre l'état initial et l'état final après roulage des couleurs différentes permettant une évaluation du nombre de cycles pénalisants supportés par ledit pneumatique.

Jusqu'ici, on s'est intéressé aux roulages ayant fait subir à l'armature de carcasse une sollicitation mécanique excessive de flexion, mais il peut être nécessaire de suivre également les conditions de température de roulage en particulier dans certaines régions du pneumatique, lesdites conditions conduisant le plus souvent à une évolution chimique des matériaux constituant le pneumatique, ladite évolution combinée avec les sollicitations normales pouvant alors conduire à une fatigue prématurée et/ou excessive desdits matériaux.

Dans le but de suivre l'évolution chimique d'un ou plusieurs mélanges de caoutchouc composant le pneumatique et plus particulièrement ce que l'on appelle le vieillissement desdits mélanges, il est possible d'utiliser un dispositif conforme à l'invention présentant l'aspect d'une pièce, par exemple rectangulaire, et dont les caractéristiques de vieillissement sont bien connues et qui lorsque ces caractéristiques sont combinées aux sollicitations usuelles d'un pneumatique en roulage conduisent à des dégradations visibles du dispositif

De manière avantageuse, il est possible d'employer une peinture à base de produit thermosensible prévue pour changer de couleur après un échauffement local ou global supérieur à une valeur de référence prédéterminée (une trop forte flexion, un frottement entre deux parties d'un pneumatique pouvant provoquer un échauffement local ou simplement conduire à un effacement local de la peinture du dispositif). Le choix de la peinture est fait en fonction de la valeur de référence choisie elle-même en fonction de la dimension du pneumatique et des conditions de fonctionnement dudit pneumatique. Dans cet exemple, il est avantageux de revêtir la totalité de la surface interne du pneumatique après sa vulcanisation; en effet, après roulage, il suffit d'une inspection visuelle de l'intérieur dudit pneumatique pour constater la présence de zones ayant changé de couleur traduisant le fait que ces zones ont atteint une température de surface supérieure à la température de référence. En outre, l'information est complétée par la localisation précise de ces points chauds.

Des dispositifs selon l'invention peuvent également être employés pour détecter et mémoriser une mise à plat totale ou quasi totale d'un pneumatique monté en simple sur un essieu sans même avoir subi de roulage dans ces conditions; dans ce cas, il est nécessaire d'employer au moins un dispositif ayant la forme d'une couronne et de le placer sur au moins un flanc, ledit dispositif étant pourvu d'un moyen particulièrement fragile et ne résistant pas à une flexion trop forte.

Une variante d'un dispositif selon l'invention consiste à poser sur l'intérieur du pneumatique une bande d'un mélange sensible à un niveau de sollicitation déterminée pendant un temps donné ou un nombre de cycles donné, ladite bande formant une hélice sur au moins un tour complet du pneumatique. Cette disposition, intéressante en fabrication, permet de mesurer un endommagement éventuel sur une partie d'un flanc dans la direction méridienne.

Une autre variante d'un dispositif selon l'invention consiste à pulvériser sur la surface interne d'un pneumatique à surveiller, un produit choisi pour adhérer à ladite surface et pour sa sensibilité à au moins une sollicitation pendant un temps ou un nombre de cycles donné.

Les divers dispositifs décrits peuvent bien entendu être avantageusement combinés sur un même pneumatique. Il est ainsi possible d'employer une pluralité de dispositifs de même structure ou de structures différentes pour suivre à la fois les sollicitations mécaniques pénalisantes pour les armatures de renfort entre autres et les effets de l'environnement modifiant les caractéristiques et les performances des mélanges constituant le pneumatique.

Un dispositif selon l'invention peut, bien entendu, être utilisé dans un même objectif avec un pneumatique nécessitant l'emploi d'une chambre à air; dans un tel cas, ledit dispositif est placé sur l'une des parois du pneumatique de manière analogue à ce qui vient d'être décrit. De même, un dispositif selon l'invention peut être placé sur la paroi externe de la chambre à air pour servir également d'indicateur de sollicitation de ladite chambre.

Un dispositif selon l'invention représente une sorte de fiche de suivi d'utilisation du pneumatique sur laquelle sont consignées les utilisations jugées particulièrement pénalisantes pour ledit pneumatique; ledit dispositif étant quasiment infalsifiable (son absence pouvant laisser penser que les sollicitations ont été particulièrement sévères et contraignantes), et contribue ainsi à une sécurité accrue pour l'utilisateur de pneumatiques pourvus d'un tel dispositif.

L'usage d'un dispositif selon l'invention permet de réduire le temps et le coût d'examen d'un pneumatique équipé avec ledit dispositif, et par sa simplicité d'interprétation il est possible d'examiner tous les pneumatiques après roulage de manière visuelle directe par un opérateur ou bien automatiquement.

Il est possible d'établir une meilleure évaluation du potentiel de durée de vie résiduelle, ce qui se traduit par une meilleure utilisation des pneumatiques et une optimisation du coût d'utilisation des pneumatiques (paramètre particulièrement sensible dans le domaine d'utilisation des pneumatiques pour véhicules poids lourd, génie civil et avions).

## Revendications

1. Dispositif de surveillance (**1, 1'**) de l'état d'endommagement d'une armature de renforcement d'un pneumatique en roulage sur un véhicule, ce dispositif étant au cours de son utilisation soumis à au moins une sollicitation mécanique cyclique de flexion entre une première flexion imposant au dispositif un premier rayon de courbure Rmin et une seconde flexion imposant au dispositif un second rayon de courbure **Rmax**, le second rayon Rmax étant plus grand que le premier rayon Rmin, ledit dispositif de surveillance de l'endommagement de ladite armature étant **caractérisé en ce qu'**il comprend un support (**5,18**) mince très flexible dont une face est prévue pour pouvoir être fixée sur l'une des parois du pneumatique et à proximité de l'armature objet de la surveillance, et **en ce que** ledit support (**5,18**) comporte des moyens (**2, 3, 4, 18**) sensibles à des flexions répétées et aptes à mémoriser de manière permanente et de façon cumulative le fait que ledit dispositif a été soumis à un nombre prédéterminé de cycles répétés de flexion entre les premier et second rayons de courbure **Rmin** et **Rmax**, l'un au moins desdits rayons de courbure étant inférieur ou égal au rayon limite de fatigue de chacun des moyens sensibles, l'information mémorisée de manière permanente pouvant être contrôlée visuellement par un opérateur ou bien d'une façon automatique, avec ou sans démontage du pneumatique du véhicule.

2. Dispositif de surveillance (**1, 1'**) selon la revendication **1 caractérisé en ce qu'**il comporte au moins deux moyens sensibles (**2, 3, 4, 18**) à de fortes flexions, lesdits moyens étant calibrés différemment pour pouvoir mémoriser de façon permanente chacun une information selon laquelle l'armature de renforcement objet de la surveillance a subi une sollicitation cyclique de flexion donnée, entre un premier rayon de courbure de valeur minimale **Rmin** et un second rayon de courbure de valeur maximale **Rmax** imposé auxdits moyens, pendant un nombre de cycles prédéterminé de façon à fournir une indication précise quant à la sollicitation réellement subie par le pneumatique en roulage dans des conditions de forte flexion.

3. Dispositif de surveillance (**1'**) selon la revendications **1** ou la revendication 2 **caractérisé en ce que** le support (**18**) est réalisé en au moins un matériau caoutchoutique choisi dans la famille des caoutchoucs diéniques sensibles à une sollicitation de fatigue en très forte flexion.

4. Dispositif de surveillance (**1**) selon l'une quelconque des revendications **1** à **3 caractérisé en ce que** le support (**5**) intègre au moins un élément sous la forme d'un fil (**2**, **3**, **4**) orienté dans une direction pouvant être repérée sur ledit support, ledit élément étant sensible à et pouvant mémoriser de manière permanente une sollicitation cyclique de forte flexion en présentant un endommagement visible après un nombre minimal prédéterminé de cycles.

5. Dispositif de surveillance(**1, 1'**) selon l'une quelconque des revendications **1** à **4 caractérisé en ce que** chaque information mémorisée par ledit dispositif peut être lue par un moyen de radioscopie ou de radiographie.

6. Pneumatique destiné à être monté sur un véhicule **caractérisé en ce qu'**il est pourvu, sur une partie ou sur la totalité de l'une au moins de ses parois, d'au moins un dispositif de surveillance (**1, 1'**) défini selon l'une des revendications **1** à **5**.

7. Pneumatique (**10**) selon la revendication **6 caractérisé en ce qu'**au moins un dispositif de surveillance (**1, 1'**) de l'endommagement d'une armature de renforcement (**11, 121**) dudit pneumatique est constitué par au moins un fil (**2, 3, 4**) sensible à des sollicitations cycliques de fortes flexions, ledit fil étant incorporé dans un pneumatique pendant la fabrication dudit pneumatique et disposé sensiblement dans la direction de l'armature objet de la surveillance.

8. Pneumatique (**10**) selon l'une quelconque des revendications **6** ou **7 caractérisé en ce qu'**il comporte en outre un moyen sensible à la température, ledit moyen étant prévu pour que ses caractéristiques physiques évoluent de façon permanente et prédéterminée en fonction de la température à laquelle il est soumis et du temps d'exposition à ladite température.

## Patentansprüche

1. Überwachungsvorrichtung (**1, 1'**) zur Überwachung des Schädigungszustands einer Verstärkungsbewehrung eines an einem Fahrzeug laufenden Luftreifens, wobei die Vorrichtung bei ihrer Verwendung mindestens einer zyklischen mechanischen Biegebeanspruchung zwischen einer ersten Durchbiegung, bei der die Vorrichtung zu einem ersten Krümmungsradius **Rmin** gebogen wird, und einer zweiten Durchbiegung, bei der die Vorrichtung zu einem zweiten Krümmungsradius Rmax gebogen wird, unterworfen wird, wobei der zweite Krümmungsradius Rmax größer ist als der erste Krümmungsradius Rmin, und wobei die Vorrichtung zur Überwachung des Schädigungszustands der Bewehrung **dadurch gekennzeichnet ist, dass**
sie einen dünnen, sehr flexiblen Träger (**5, 18**) aufweist, von dem eine Fläche zur Befestigung an einer der Wände des Luftreifens und in der Nähe der das Überwachungsobjekt darstellenden Bewehrung vorgesehen ist,
der Träger (**5, 18**) Mittel (**2, 3, 4, 18**) aufweist, die gegen wiederholte Biegungen empfindlich und in der Lage sind, dauerhaft und kumulativ zu speichern, dass die Vorrichtung einer vorgegebenen Anzahl von wiederholten Biegungszyklen zwischen dem ersten Krümmungsradius **Rmin** und dem zweiten Krümmungsradius **Rmax** unterworfen war,
wobei mindestens einer der Krümmungsradien kleiner oder gleich dem Grenz-Krümmungsradius der Ermüdung jedes der empfindlichen Mittel ist und
die dauerhaft gespeicherte Information visuell durch eine Bedienungsperson oder automatisch mit oder ohne Abmontieren des Reifens vom Fahrzeug kontrolliert werden kann.

2. Überwachungsvorrichtung (**1, 1'**) nach Anspruch 1, **dadurch gekennzeichnet, dass** sie mindestens zwei empfindliche Mittel (**2, 3, 4, 18**) für starke Biegungen aufweist, die unterschiedlich kalibriert sind, sodass jedes der Mittel eine Information dauerhaft speichern kann, gemäß der die Verstärkungsbewehrung als Überwachungsobjekt einer gegebenen zyklischen Biegebeanspruchung zwischen einem ersten Krümmungsradius mit einem Minimalwert **Rmin** und einem zweiten Krümmungsradium mit einem Maximalwert **Rmax**, die auf diese Mittel einwirkt, während einer vorgegebenen Anzahl von Zyklen unterlag, um so eine genaue Angabe bezüglich der realen Beanspruchung zu liefern, welcher der Luftreifen beim Laufen unter Bedingungen starker Biegung unterlag.

3. Überwachungsvorrichtung (1') nach Anspruch 1 oder Anspruch 2, **dadurch gekennzeichnet, dass** der Träger (**18**) aus mindestens einem Kautschukmaterial besteht, das aus der Gruppe der Dienkautschuke ausgewählt ist, die gegen eine Ermüdungsbeanspruchung bei starker Biegung empfindlich sind.

4. Überwachungsvorrichtung (**1**) nach einem oder mehreren der Ansprüche 1 bis 3, **dadurch gekennzeichnet, dass** der Träger (**5**) mindestens ein Element in Form eines Drahtes (**2, 3, 4**) integriert enthält, das in einer Richtung orientiert ist, die auf dem Träger lokalisiert werden kann, wobei das Element gegen eine zyklische starke Biegebeanspruchung empfindlich ist und diese Biegebeanspruchung dauerhaft speichern kann, indem es nach einer vorgegebenen Mindestanzahl von Zyklen eine sichtbare Schädigung zeigt.

5. Überwachungsvorrichtung (**1, 1'**) nach einem oder mehreren der Ansprüche 1 bis 4, **dadurch gekennzeichnet, dass** jede von der Vorrichtung gespeicherte Information durch eine Einrichtung zur Röntgenographie oder Röntgenphotographie gelesen werden kann.

6. Luftreifen, der zur Montage an einem Fahrzeug vorgesehen ist, **dadurch gekennzeichnet, dass** er auf mindestens einer seiner Wände auf einem Teil der Wand oder auf der ganzen Wand mit mindestens einer Überwachungsvorrichtung (**1, 1'**) versehen ist, die gemäß einem der Ansprüche 1 bis 5 definiert ist.

7. Luftreifen (**10**) nach Anspruch 6, **dadurch gekennzeichnet, dass** mindestens eine Überwachungsvorrichtung (**1, 1'**) zur Überwachung der Schädigung einer Verstärkungsbewehrung (**11, 121**) des Luftreifens aus mindestens einem Draht (**2, 3, 4**) besteht, der gegen zyklische starke Biegebeanspruchungen empfindlich ist, wobei der Draht während der Herstellung des Luftreifens eingebracht und im Wesentlichen in der Richtung der das Überwachungsobjekt bildenden Bewehrung angeordnet wurde.

8. Luftreifen (**10**) nach einem oder mehreren der Ansprüche 6 oder 7, **dadurch gekennzeichnet, dass** er ferner ein temperaturempfindliches Mittel aufweist, das so ausgebildet ist, dass sich seine physikalischen Eigenschaften dauerhaft und in vorgegebener Weise in Abhängigkeit von der Temperatur, der es ausgesetzt war, und von der Zeit, während der es dieser Temperatur ausgesetzt war, ändern.

## Claims

1. A device (1, 1') for monitoring the state of damage to a reinforcement armature of a tyre running on a vehicle, this device during its use having been subjected to at least one predetermined cyclic mechanical bending stress between a first bending imposing on the device a first radius of curvature Rmin and a second bending imposing on the device a second radius of curvature Rmax, the second radius Rmax being greater than the first radius Rmin, said device for monitoring the damage to said reinforcement being **characterised in that** it comprises a very flexible thin support (5, 18), one face of which is designed to be fixed to one of the walls of the tyre and in proximity to the armature being monitored, and **in that** said support (5, 18) comprises means (2, 3, 4, 18) sensitive to repeated bending and capable of permanently and cumulatively memorising the fact that said device has been subjected to a predetermined number of repeated bending cycles between the first and second radii of curvature Rmin and Rmax, at least one of said radii of curvature being less than or equal to the fatigue limit radius of each of the sensitive means, the permanently memorised information being able to be checked visually by an operator or even automatically, with or without dismounting the tyre from the vehicle.

2. A monitoring device (1, 1') according to Claim 1, **characterised in that** it comprises at least two means (2, 3, 4, 18) sensitive to intense bending, said means being calibrated differently so that each can permanently memorise a piece of information, depending on which the reinforcement armature being monitored has undergone a given cyclic bending stress, between a first radius of curvature of minimum value Rmin and a second radius of curvature of maximum value Rmax imposed on said means, for a predetermined number of cycles, so as to furnish a precise indication as to the stress actually sustained by the rolling tyre under intense bending conditions.

3. A monitoring device (1') according to Claim 1 or Claim 2, **characterised in that** the support (18) is made of at least one rubber material, selected from the family of diene rubbers which are sensitive to fatigue stress on very intense bending.

4. A monitoring device (1) according to any one of Claims 1 to 3, **characterised in that** the support (5) includes at least one element in the form of a cord (2, 3, 4) oriented in a direction that can be marked on said support, said element being sensitive to and capable of permanently memorising an intense cyclic bending stress manifesting visible damage after a predetermined minimum number of cycles.

5. A monitoring device (1, 1') according to any one of Claims 1 to 4, **characterised in that** each piece of information memorised by said device can be read by a radioscopy or radiography means.

6. A tyre intended to be mounted on a vehicle, **characterised in that** it is provided, over part or all of at least one of its walls, with at least one monitoring device (1, 1') defined in accordance with one of Claims 1 to 5.

7. A tyre (10) according to Claim 6, **characterised in that** at least one device (1, 1') for monitoring the damage to a reinforcement armature (11, 121) of said tyre is formed by at least one cord (2, 3, 4) sensitive to intense cyclic bending stresses, said cord being incorporated in a tyre during the manufacture of said tyre and placed substantially in the direction of the armature being monitored.

8. A tyre (10) according to any one of Claims 6 or 7, **characterised in that** it further comprises a means sensitive to temperature, said means being designed so that its physical characteristics permanently evolve in predetermined manner in accordance with the temperature to which it is subjected and the period of exposure to said temperature.
